# EUROPEAN PATENT SPECIFICATION

(11) **EP 3 734 706 B1**
(45) Date of publication and mention of the grant of the patent: **30.03.2022**
(21) Application number: 20171859.0
(22) Date of filing: 28.04.2020
(51) Int. Cl.: H01M 4/131, H01M 50/46, H01M 50/411, H01M 4/133, H01M 4/136, H01M 4/505, H01M 4/525, H01M 4/58, H01M 10/42, H01M 4/587, H01M 4/62, H01M 4/36, H01M 4/02

(54) **NEGATIVE ELECTRODE FOR RECHARGEABLE LITHIUM BATTERY AND RECHARGEABLE LITHIUM BATTERY COMPRISING SAME**
NEGATIVE ELEKTRODE FÜR EINE WIEDERAUFLADBARE LITHIUMBATTERIE UND WIEDERAUFLADBARE LITHIUMBATTERIE DAMIT
ÉLECTRODE NÉGATIVE POUR BATTERIE RECHARGEABLE AU LITHIUM ET BATTERIE RECHARGEABLE AU LITHIUM LA COMPRENANT

(30) Priority: 03.05.2019 KR 20190052569
(43) Date of publication of application: 04.11.2020
(73) Proprietor: Samsung SDI Co., Ltd., Gyeonggi-do 17084 (KR)
(72) Inventor: Ha, Jaehwan, 17084 Yongin-si, Gyeonggi-do (KR); Kim, Kijun, 17084 Yongin-si, Gyeonggi-do (KR); Kim, Beom Kwon, 17084 Yongin-si, Gyeonggi-do (KR); Nam, Junghyun, 17084 Yongin-si, Gyeonggi-do (KR); Yoo, Heeeun, 17084 Yongin-si, Gyeonggi-do (KR); Yoon, Yeonhee, 17084 Yongin-si, Gyeonggi-do (KR); Lee, Kyuseo, 17084 Yongin-si, Gyeonggi-do (KR); Lee, Dongmyung, 17084 Yongin-si, Gyeonggi-do (KR)
(74) Representative: Gulde & Partner

(56) References cited:
- EP-A1- 1 826 842
- WO-A1-2018/012821
- JP-A- 2018 147 672

## Description

### BACKGROUND OF THE INVENTION

### (a) Field of the Invention

A negative electrode for a rechargeable lithium battery and a rechargeable lithium battery are disclosed.

### (b) Description of the Related Art

A rechargeable lithium battery having high energy density and that is easily-portable has been generally used as a driving power source for a portable information device such as a cell phone, a laptop, a smart phone, and the like. Furthermore, studies for using the rechargeable lithium battery utilizing high energy density characteristics as a driving powder source or power storage source have been actively researched. Examples may be found in JP 2018 147672 A, WO 2018/012821 A1 or EP 1 826 842 A1.

Recently, mobile information devices have been rapidly down-sized and lightened, and thus the rechargeable lithium battery used as its driving power source has been required to have higher capacity and also to be cordlessly charged with a short charge time. Particularly, the short charge time, i.e., rapid charge, is the most required, as a long charge time is complained of as the greatest inconvenience by users.

However, the battery for the rapid charge requires high input and output, thereby having shortcomings related to thermal and physical safety. For example, heat generation of the rechargeable lithium battery due to an internal short circuit, overcharge and overdischarge, and the like, causes electrolyte decomposition and a thermal runaway phenomenon, thereby abruptly increasing internal pressure inside the battery to produce an explosion of the battery. Particularly, when the internal short circuit of the rechargeable lithium battery occurs, there is a high risk of explosion, as high electrical energy which is respectively stored in the shorted positive electrode and negative electrode suddenly conducts.

Such an explosion can cause fatal damage to users as well as breakage of the rechargeable lithium battery, so that the development for improving the safety of the rechargeable lithium battery for rapid charge is quickly required.

### SUMMARY OF THE INVENTION

An embodiment provides a negative electrode for a rechargeable lithium battery exhibiting good high-rate charge characteristics and improved safety. Another embodiment provides a rechargeable lithium battery including the negative electrode.

One embodiment provides a negative current collector, a negative active material layer, and a negative functional layer which are sequentially laminated, the negative active material layer includes a negative active material including a crystalline carbonaceous material and the crystalline carbonaceous material has a ratio, l(₀₀₂)/l(₁₁₀) of X-ray diffraction peak intensity at a (002) plane to X-ray diffraction peak intensity at a (110) plane ranging from 30 to 110 determined by using a CuKa ray, and the negative functional layer includes flake-shaped polyethylene particles.

The crystalline carbonaceous material may be artificial graphite, natural graphite, or a combination thereof.

The ratio, l(₀₀₂)/l(₁₁₀) of X-ray diffraction peak intensity at a (002) plane to X-ray diffraction peak intensity at a (110) plane of the crystalline carbonaceous material may be 35 to 105. The flake-shaped polyethylene particles may have an average particle size of 1µm to 8µm.

The flake-shaped polyethylene particles have a ratio of a length of a long axis to a length of a short axis of 1.1 to 4.5.

A thickness of the flake-shaped polyethylene particles may be 0.2 µm to 4 µm.

The negative functional layer may further include inorganic particles and a binder.

A sum amount of the flake-shaped polyethylene particles and the inorganic particles may be 80 wt% to 99 wt% based on the total weight of the negative functional layer.

The flake-shaped polyethylene particles and the inorganic particles may be included at a weight ratio of 95:5 to 10:90.

A thickness of the negative functional layer may be 1 µm to 10 µm.

Another embodiment provides a rechargeable lithium battery comprising a positive electrode including: a positive current collector and a positive active material layer positioned on the positive current collector; a negative electrode; and an electrolyte.

The positive active material layer includes: a first positive active material including at least one of a composite oxide of lithium and a metal selected from cobalt, manganese, nickel, or a combination thereof; and a second positive active material including a compound represented by Chemical Formula 1.

[Chemical Formula 1] LiₐFe₁-ₓMₓPO₄

wherein, 0.90 ≤ a ≤ 1.8, 0 ≤ x ≤ 0.7, and M is Mn, Co, Ni or a combination thereof.

The first positive active material may be at least one selected from LiCoO₂, Li_{b}M¹_{1-y1-z1}M²_{y1}M³_{z1}O₂ (wherein 0.9 ≤ b ≤ 1.8, 0 ≤ y1 ≤ 1, 0 ≤ z1 ≤ 1, 0 ≤ y1+z1 ≤ 1, and M¹, M², and M³ are each independently a metal selected from Ni, Co, Mn, Al, Sr, Mg, La, or a combination thereof), or a combination thereof.

The second positive active material may include LiFePO₄.

The positive active material layer may further include a positive functional layer positioned on the positive active material layer.

The first positive active material may be included in the positive active material layer, and the second positive active material may be included in at least one of the positive active material layer and the positive functional layer.

The first positive active material and the second positive active material may be included at a weight ratio of 97:3 to 80:20.

The first positive active material may be included at 70 wt% to 99 wt% based on the total weight of the positive active material layer, and the second positive active material may be included at 1 wt% to 30 wt% based on the total weight of the positive active material layer. The negative electrode for a rechargeable lithium battery may provide a rechargeable lithium battery exhibiting good high-rate charge characteristics and improved safety to thermal and physical impact.

### BRIEF DESCRIPTION OF THE DRAWINGS

FIG. 1 is a schematic view of a negative electrode for a rechargeable lithium battery according to one embodiment.
FIG. 2 is schematic view showing the structure of a rechargeable lithium battery according to one embodiment.
FIG. 3 is scanning electron microscope (SEM) photograph of polyethylene spherical particles in a state of a distributed solution.
FIG. 4 is a SEM photograph of the flake-shaped polyethylene particles according to Example 1-1.
FIG. 5 is a graph showing high-temperature capacity characteristics and thickness variation of rechargeable lithium cells according to Example 1-1 and Comparative Example 4.

| Name of unit | Symbol | Conversion factor | SI or metric unit |
|---|---|---|---|
| density | g/cc | 1 | g/cm³ |
| volume | cc | 1 | cm³ |

### DETAILED DESCRIPTION OF THE INVENTION

Hereinafter, referring to the drawings, embodiments of the present invention are described in detail. However, in the following description of the present disclosure, well-known functions or constructions will not be described in order to clarify the present disclosure.

The descriptions of the well-known functions or constructions will not be described in order to clarify characteristics of the present disclosure, and the same reference numerals designate the same or similar constituent elements throughout the specification

Furthermore, the size and the thickness are arbitrarily illustrated in the drawings for better understanding and ease of description, and the present disclosure is not necessarily limited thereto.

A negative electrode for a rechargeable lithium battery includes a negative current collector, a negative active material layer, and a negative functional layer which are sequentially laminated.

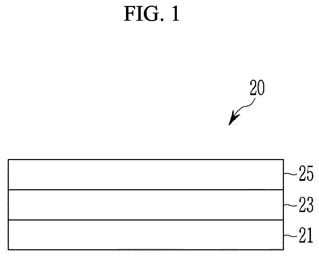

FIG. 1 is a schematic view of a negative electrode for a rechargeable lithium battery.

Referring to FIG. 1, a negative electrode 20 for a rechargeable lithium battery includes a negative current collector 21, a negative active material layer 23 positioned on the negative current collector 21, and a negative functional layer 25 positioned on the negative active material layer 23.

The negative current collector 21 may include a copper foil, a nickel foil, a stainless steel foil, a titanium foil, a nickel foam, a copper foam, a polymer substrate coated with a conductive metal, or a combination thereof.

The negative active material layer 23 includes a negative active material including a crystalline carbonaceous material.

The crystalline carbonaceous material may be artificial graphite, natural graphite, or a combination thereof, and in an embodiment, artificial graphite.

The artificial graphite may be a coke type of artificial graphite such as a needle-coke type, an isotopic coke type, a sponge coke type, or a shot coke type. When the artificial graphite having the structure is used, an orientation of the negative active material may be suitably increased and the rapid charge characteristics of the battery may be improved.

Meanwhile, the coke type of artificial graphite may be obtained by graphitization heat-treating each of a needle-coke, an isotopic coke, or shot coke.

The negative active material may further include a Si-based material, a Sn-based material, or a combination thereof.

The Si-based material or the Sn-based material may be Si, a Si-C composite, SiOₓ (0 < x ≤ 2), a Si-Q alloy (wherein Q is an element selected from an alkali metal, an alkaline-earth metal, a Group 13 element, a Group 14 element, a Group 15 element, a Group 16 element, a transition metal, a rare earth element, or a combination thereof, and is not Si), Sn, SnO₂, a Sn-R alloy (wherein R is an element selected from an alkali metal, an alkaline-earth metal, a Group 13 element, a Group 14 element, a Group 15 element, a Group 16 element, a transition metal, a rare earth element, or a combination thereof, and is not Sn), and the like, and at least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, or a combination thereof.

The Si-based material, the Sn-based material, or a combination thereof may be included in an amount of about 0.1 wt% to about 20 wt% based on the total weight of the negative active material. When the amount of the Si-based material or the Sn-based material is within the range, expansion of the electrode may be suppressed and the cycle-life characteristics and the charge and discharge efficiency of the battery may be improved.

A ratio l(₀₀₂)/l(₁₁₀) of X-ray diffraction peak intensity at a (002) plane to X-ray diffraction peak intensity at a (110) plane of the crystalline carbonaceous material is 30 or more, for example, 35 or more, or 40 or more, and 110 or less, 105 or less, or 100 or less.

Generally, as a ratio l(₀₀₂)/l(₁₁₀) of X-ray diffraction peak intensity at a (002) plane to X-ray diffraction peak intensity at a (110) plane is reduced, random-orientation is increased to increase the degree of disorder of the orientation of the crystalline carbonaceous material. Thus, it causes to the intercalation and deintercalation of the lithium ions into/ from the negative active material during charging and discharging to easily occur, and it may be suitably applied for the rapid charging. However, the extremely high random orientation causes a decrease in a pellet density of the negative active material, thereby reducing the specific capacity of the battery and causes very high input and output to occur, thereby reducing the safety of the battery. Thus, when the ratio l(₀₀₂)/l(₁₁₀) (hereinafter, referred as X-ray diffraction peak intensity ratio |(₀₀₂)/|(₁₁₀)) is within the above range, the specific capacity of the battery may be suitably maintained and the improved high rate charge characteristics may be exhibited.

Meanwhile, the X-ray diffraction peak intensity ratio l(₀₀₂)/l(₁₁₀) of the crystalline carbonaceous material may be increased by, for example, increasing the heat-treatment temperature or adding a SiC graphitization catalyst in the preparation of the crystalline carbonaceous material.

Meanwhile, the X-ray pattern is determined by using a CuKa ray, when a specific limitation is not otherwise provided, and the peak intensity refers to a height ratio of the each peaks.

The negative active material may be included in an amount of 95 wt% to 98.5 wt%, for example, 95 wt% to 98 wt%, based on the total weight of the negative active material layer. In one embodiment, the negative active material layer may optionally further include a negative binder and a negative conductive material.

The negative binder acts to adhere negative active material particles to each other and to adhere negative active materials to the current collector. The negative binder may be a non-aqueous binder, an aqueous binder, or a combination thereof.

The non-aqueous binder may be polyvinyl chloride, carboxylated polyvinyl chloride, polyvinylfluoride, an ethylene oxide-containing polymer, polyvinylpyrrolidone, polyurethane, polytetrafluoroethylene, polyvinylidene fluoride, polyethylene, polypropylene, polyamideimide, polyimide, or a combination thereof.

The aqueous binder may be a rubber-based binder or a polymer resin binder. The rubber-based binder may be styrene-butadiene rubber, acrylated styrene-butadiene rubber (SBR), acrylonitrile butadiene rubber, acryl rubber, butyl rubber, fluorine rubber, or a combination thereof. The polymer resin binder may be polypropylene, ethylene propylene copolymer, polyepichlorohydrin, polyphosphazene, polyacrylonitrile, polystyrene, ethylene propylene diene copolymer, polyvinylpyrridine, chlorosulfonated polyethylene, latex, polyester resin, acryl resin, phenol resin, epoxy resin, polyvinyl alcohol, or a combination thereof.

When the aqueous binder is used as a negative electrode binder, a cellulose-based compound may be further used to provide viscosity as a thickener. The cellulose-based compound includes one or more of carboxymethyl cellulose, hydroxypropylmethyl cellulose, methyl cellulose, or alkali metal salts thereof. The alkali metal may be Na, K, or Li. The thickener may be included in an amount of 0.1 wt% to 3 wt% based on a total weight of the negative active material.

When the negative active material layer further includes the negative binder, the negative binder may be included in an amount of 1 wt% to 5 wt% based on the total weight of the negative active material layer and the negative active material may be included in an amount of 95 wt% to 99 wt% based on the total weight of the negative active material layer.

The conductive material is included to provide electrode conductivity. Any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

When the negative active material layer includes the negative binder and the negative conductive material, the negative conductive material may be included in an amount of 1 wt% to 5 wt% based on the total weight of the negative active material layer, the negative binder may be included in an amount of 1 wt% to 5 wt% based on the total weight of the negative active material layer and the negative active material may be included in an amount of 90 wt% to 98 wt% based on the total weight of the negative active material layer.

The thickness of the negative active material layer may be 30 µm to 90 µm, for example 40 µm to 80 µm, or 50 µm to 70 µm.

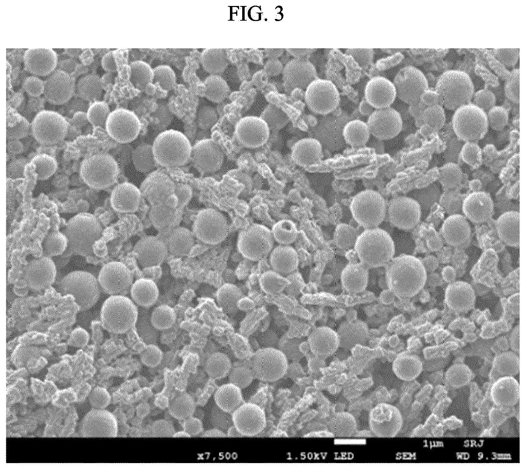

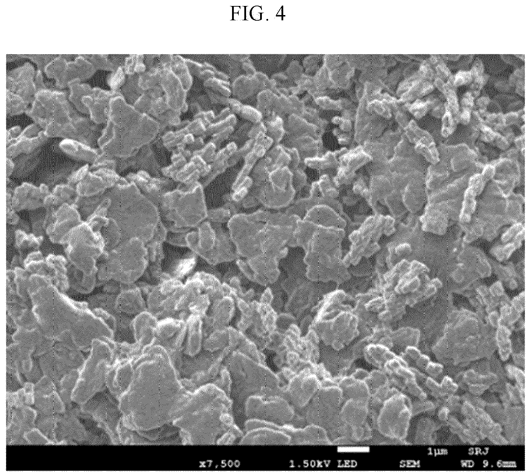

According to one embodiment, the negative functional layer 25 includes flake-shaped polyethylene particles. When the battery for the rapid charge exhibiting improved charge and discharge characteristics according to one embodiment is used, the shortcomings related to thermal and physical safety due to the high input and output may occur, but the negative functional layer coated on the negative active material layer may quickly shut down the battery under the abnormal operation or the heat runway of the battery, thereby improving the thermal and physical safety of the battery. The shape of the flake-shaped polyethylene particles is illustrated in FIG. 3 and FIG. 4. FIG. 3 is a scanning electron microscope (SEM) photograph of polyethylene spherical particles in a state of a distributed solution, and FIG. 4 is a SEM photograph of the flake-shaped polyethylene particle. Referring to FIG. 3 and FIG. 4, it can be seen that the flake-shaped polyethylene particles have a clearly different shape from the spherical polyethylene particles. In other words, non-spherical polyethylene particles are used according to the present disclosure.

Thus, the flake-shaped polyethylene particles according to one embodiment provide a thinner and wider functional layer, compared to the spherical particles, and may be quickly melted to close a wide area of an ion path.

Generally, polyethylene may be classified into HDPE (high density polyethylene, density: 0.94 g/cc to 0.965 g/cc), MDPE (medium density polyethylene, density: 0.925 g/cc to 0.94 g/cc), LDPE (low density polyethylene, density: 0.91 g/cc to 0.925 g/cc), and VLDPE (very low density polyethylene, density: 0.85 g/cc to 0.91 g/cc), depending on the density.

The flake-shaped polyethylene particles may be used alone or as a mixture of two or more polyethylene polymers, for example, HDPE, MDPE, and LDPE.

The flake-shaped polyethylene particles may have a melting point (Tm) of 80 °C to 150 °C, for example, 90 °C to 140 °C determinable by differential scanning calorimetry (DSC) according to ISO 11357-3.

A density of the flake-shaped polyethylene particles may be 0.91 g/cc to 0.98 g/cc, and specifically, 0.93 g/cc to 0.97 g/cc.

A particle size of the flake-shaped polyethylene particles is1 µm to 8 µm, for example, 1.5 µm or more, 2.0 µm or more, or 2.5 µm or more, and 8 µm or less, 7.5 µm or less, 7 µm or less, 6.5 µm or less, 6.0 µm or less, 5.5 µm or less, 5 µm or less, 4.5 µm or less, 4 µm or less, 3.5 µm or less, or 3 µm or less.

A ratio of a length of the long axis to a length of the short axis of the flake-shaped polyethylene particles is 1.1 to 4.5. For example, a length of the long axis to a length of the short axis of the flake-shaped polyethylene particles may be 1.2 to 3.5. Specifically, the ratio may refer to the aspect ratio of the minimum to the maximum Feret diameter. The Aspect Ratio Ψ_{A} (0 < Ψ_{A}≤ 1) is defined by the ratio of the Minimum to the Maximum Feret Diameter Ψ_{A} = X_{Feret min} / X_{Feret max}. It gives an indication for the elongation of the particle. Furthermore, a thickness of the flake-shaped polyethylene particle is 0.2 µm to 4 µm, and specifically, 0.3 µm to 2.5 µm, 0.3 µm to 1.5 µm, or 0.3 µm to 1 µm.

When the size of the flake-shaped polyethylene particle, the ratio of the length of the long axis to the length of the short axis, and the thickness are within the above ranges, resistance to transferring lithium ions is minimized to secure the performance of the battery, and the shut-down function is further improved to initially prevent the heat generation of the battery. The particle size of the flake-shaped polyethylene particle is an average particle size (D50) which refers to 50 % by volume in the cumulative size-distribution curve.

In the specification, when the specific definition is not otherwise provided, the average particle size D50 may be determined by general methods which are well known to one of ordinary skill in the art, for example, using a particle size analyzer, or using transmission electron microscope photography or scanning electron microscope photography. Alternatively, the D50 may be obtained by measuring with a measurement device using dynamic light-scattering, and analyzing the resulting data to count numbers of particles of each particle size and determine the result therefrom.

More precisely, the particle size of a flake-shaped polyethylene particle is determined by a dynamic light-scattering measurement method. Specifically, the size may be measured by ISO 13320 through the analysis of the light-scattering properties of the particles. Alternatively, the sizes may be determined by using a laser scattering particle size analyzer, e.g., LS13 320 series available from Beckman Coulter diffraction, Inc. Before measuring the sizes, the positive active material may be pre-treated by adding the positive active material to a main solvent at a predetermined amount, e.g., 5 wt% to dilute and ultrasonic disperse them for a predetermined time, e.g., 1 minute.

For the non-spherical particles, a size distribution is reported, where the predicted scattering pattern for the volumetric sum of spherical particles matches the measured scattering pattern.

The negative functional layer may optionally further include an inorganic particle and a binder, together with the flake-shaped polyethylene particle. If they are further included, the heat generation of the battery initiating the shut-down function of the flake-shaped polyethylene particle may be initially prevented and the electrical insulation of the inorganic particle may prevent the short-circuit between the positive and the negative electrodes, and the binder acts to bind the flake-shaped polyethylene particle and the inorganic particle and adhere them to the negative active material layer. Thus, the thermal and physical safety and the cycle-life characteristics of the rechargeable lithium battery may be improved. The inorganic particle may be, for example, Al₂O₃, SiO₂, TiO₂, SnO₂, CeO₂, MgO, NiO, CaO, GaO, ZnO, ZrO₂, Y₂O₃, SrTiO₃, BaTiO₃, Mg (OH)₂, boehmite, or a combination thereof, but is not limited thereto. Furthermore, in addition to the inorganic particle, the organic particles such as an acryl compound, an imide compound, an amide compound, or a combination thereof may be included, but is not limited thereto.

The inorganic particles may have a spherical, flake, cubic, granular, or unspecified shape. The average particle size D50 of the inorganic particle may be 1 nm to 2500 nm, for example, 100 nm to 2000 nm, 200 nm to 1000 nm, or 300 nm to 800 nm. The particle size may be determined by a dynamic light-scattering measurement method, for example ISO 13320. Alternatively, the sizes may be determined by using a laser scattering particle size analyzer, e.g., LS13 320 series available from Beckman Coulter diffraction, Inc. Before measuring the sizes, the positive active material may be pre-treated by adding the positive active material to a main solvent at a predetermined amount, e.g., 5 wt% to dilute and ultrasonic disperse them for a predetermined time, e.g., 1 minute.

The sum amount of the flake-shaped polyethylene particles and the inorganic particles may be 80 wt% to 99 wt% based on the total weight of the negative functional layer, and specifically, 85 wt% to 97 wt%, 90 wt% to 97 wt%, 93 wt% to 97 wt%, or 95 wt% to 97 wt%.

A weight ratio of the flake-shaped polyethylene particles and the inorganic particles may be 95:5 to 10:90, and specifically, 75:25 to 30:70, 70:30 to 35:65, 65:35 to 40:60, 60:40 to 45:55, or 55:45 to 50:50. In such a, the thickness of the negative functional layer may be suitably controlled and the safety of the battery may be simultaneously and effectively improved.

The binder may be the same as one which is used in the negative active material layer, but it is not limited thereto, although it may be generally used in the rechargeable lithium battery.

The amount of the binder may be 1 wt% to 20 wt% based on the total weight of the negative functional layer, and specifically, 3 wt% to 15 wt%, 3 wt% to 10 wt%, 3 wt% to 7 wt%, or 3 wt% to 5 wt%.

A thickness of the negative functional layer may be 1 µm to 10 µm, specifically, 2 µm to 8 µm, and preferably 3 µm to 7 µm.

Another embodiment provides a rechargeable lithium battery including: a positive electrode including a positive current collector and a positive active material layer positioned on the positive current collector; the negative electrode; and an electrolyte.

The negative electrode is the above negative electrode according to one embodiment.

The positive electrode according to one embodiment may include a positive current collector and a positive active material positioned on the positive current collector.

The positive current collector may be a copper foil, a nickel foil, a stainless steel foil, a titanium foil, a nickel foam, a copper foam, a polymer substrate coated with a conductive metal, or a combination thereof.

The positive active material layer includes a first positive active material including at least one of a composite oxide of a metal selected from cobalt, manganese, nickel, or a combination thereof, and lithium; and a second positive active material including a compound represented by Chemical Formula 1.

[Chemical Formula 1] LiₐFe₁₋ₓMₓPO₄

Wherein, 0.90 ≤ a ≤ 1.8, 0 ≤ x ≤ 0.7, and M is Mn, Co, Ni, or a combination thereof.

The first positive active material may specifically be LiCoO₂, Li_{b}M¹_{1-y1-z1}M²_{y1}M³_{z1}O₂ (0.9 ≤ b ≤ 1.8, 0 ≤ y1 ≤ 1, 0 ≤ z1 ≤ 1, 0 ≤ y1+z1 ≤ 1, M¹, M², and M³ are each independently a metal selected from Ni, Co, Mn, Al, Sr, Mg, La, etc. or a combination thereof), or a combination thereof.

For example, the first positive active material may be LiCoO₂, but is not limited thereto.

For example, the M¹ may be Ni, and the M² and M³ are each independently a metal selected from Co, Mn, Al, Sr, Mg, La, etc.

Specifically, the M¹ may be Ni, the M² may be Co, and the M³ may be Mn or Al, but are not limited thereto.

The second positive active material may include, for example, LiFePO₄.

An average diameter of the first positive active material may be 10 µm to 30 µm, specifically, 10 µm to 25 µm, and for example 13 µm to 20 µm. Furthermore, an average diameter of the second positive active material may be 300 nm to 700 nm, specifically 300 nm to 600 nm, and for example 300 nm to 500 nm. When the average diameters of the first positive active material and the second positive active material are within the ranges, energy density may be increased, so that the high-capacity rechargeable lithium battery may be realized. The sizes may be determined by a dynamic light-scattering measurement method, for example ISO 13320. Alternatively, the sizes may be determined by using a laser scattering particle size analyzer, e.g., LS13 320 series available from Beckman Coulter diffraction, Inc. Before measuring the sizes, the positive active material may be pre-treated by adding the positive active material to a main solvent at a predetermined amount, e.g., 5 wt% to dilute and ultrasonic disperse them for a predetermined time, e.g., 1 minute.

The rechargeable lithium battery according to one embodiment of the present invention includes the negative functional layer positioned on the negative active material layer as well as the positive active material layer including the first positive active material and the second positive active material, so that the speed for increasing heat due to the thermal/ physical impact may be decreased, and it is helpful to completely close a path for moving ions by melting the flake-shaped polyethylene particle.

According to one embodiment, the positive electrode may further include a positive functional layer positioned on the positive active material layer.

The first positive active material may be included in the positive active material layer, and the second positive active material may be included in at least one of the positive active material layer and the positive functional layer.

In one embodiment, the weight ratio of the first positive active material and the second positive active material may be 97:3 to 80:20, and for example, 95:5 to 85:15.

An amount of the first positive active material may be 70 wt% to 99 wt% based on the total weight of the positive active material layer, and specifically, 85 wt% to 99 wt%, 85 wt% to 95 wt%, or 85 wt% to 93 wt%. When the amount of the first positive active material is satisfied in the range, the safety of the battery may be improved, without a decrease of the capacity.

Furthermore, the amount of the second positive active material may be 1 wt% to 30 wt% based on the total weight of the positive active material layer, and specifically, 1 wt% to 15 wt%, 5 wt% to 15 wt%, or 7 wt% to 15 wt%. When the amount of the second positive active material is satisfied in the range, the safety of the battery may be improved, without a decrease of the capacity.

The positive active material layer may optionally further include a positive conductive material and a positive binder.

The positive conductive material is included to provide electrode conductivity and the positive conductive materials may be the same as the above negative conductive materials.

The positive binder improves binding properties of positive active material particles with one another and with a current collector. Examples thereof may be polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene butadiene rubber, an acrylated styrene butadiene rubber, an epoxy resin, nylon, and the like, but are not limited thereto.

When the positive active material layer includes the positive conductive material, the positive conductive material may be included in an amount of about 1 wt% to about 5 wt% based on the total amount of the positive active material layer.

When the positive active material layer includes the positive binder, the positive binder may be included in an amount of 1 wt% to 5 wt% based on the total amount of the positive active material layer.

The positive electrode may further include a positive functional layer positioned on the positive active material layer. Furthermore, the first positive active material may be included in the positive active material layer, and the second positive active material may be included in at least one of the positive active material layer and the positive functional layer. As such, the safety due to the thermal and physical impact may be further improved.

The positive functional layer includes the second positive active material, and may further optionally include the positive conductive material and the positive binder.

The second positive active material included in the positive functional layer may be included in an amount of 95 wt% to 99 wt% based on the total weight of the positive functional layer, and more specifically, 96 wt% to 99 wt%, 97 wt% to 99 wt%, or 98 wt% to 99 wt%.

If the positive functional layer includes the positive conductive material, the positive conductive material may be included in an amount of 1 wt% to 5 wt% based on the total weight of the positive functional layer.

If the positive functional layer includes the positive binder, the positive binder may be included in an amount of 1 wt% to 5 wt% based on the total weight of the positive functional layer.

The electrolyte according to one embodiment includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent. The carbonate based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, t-butyl acetate, methyl propionate, ethyl propionate, y-butyrolactone, decanolide, valerolactone, mevalonolactone, caprolactone, and the like. The ether-based solvent may include dibutyl ether, tetraglyme, diglyme, dimethoxyethane, 2-methyltetrahydrofuran, tetrahydrofuran, and the like. The ketone-based solvent includes cyclohexanone and the like. The alcohol-based solvent include ethyl alcohol, isopropyl alcohol, and the like, and examples of the aprotic solvent include nitriles such as R-CN (where R is a C2 to C20 linear, branched, or cyclic hydrocarbon, and may include a double bond, an aromatic ring, or an ether bond), amides such as dimethylformamide, dioxolanes such as 1,3-dioxolane, sulfolanes, and the like.

The organic solvent may be used alone or in a mixture. When the organic solvent is used in a mixture, the mixture ratio may be controlled in accordance with a desirable battery performance.

The carbonate-based solvent may include a mixture with a cyclic carbonate and a linear carbonate. The cyclic carbonate and linear carbonate are mixed together in a volume ratio of about 1:1 to about 1:9. When the mixture is used as an electrolyte, it may have enhanced performance.

The organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 2.

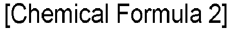

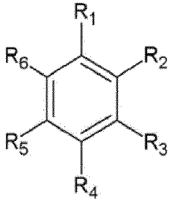

In Chemical Formula 2, R₁ to R₆ are the same or different and are selected from hydrogen, a halogen, a C1 to C10 alkyl group, a haloalkyl group, or a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The lithium salt dissolved in an organic solvent supplies a battery with lithium ions, basically operates the rechargeable lithium battery, and improves transportation of the lithium ions between positive and negative electrodes. Examples of the lithium salt include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N(lithium bis(fluorosulfonyl)imide: LiFSI), LiC₄F₉SO₃, LiClO₄, LiAlO₂, LiAlCl₄, LiN(CₓF₂ₓ₊₁SO₂)(C_{y}F_{2y+1}SO₂) (where x and y are natural numbers, for example integers of 1 to 20), LiCI, Lil, and LiB(C₂O₄)₂ (lithium bis(oxalato) borate; LiBOB).

A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

The electrolyte may further include an additive of vinylene carbonate, or an ethylene carbonate-based compound represented by Chemical Formula 3 to improve a cycle life.

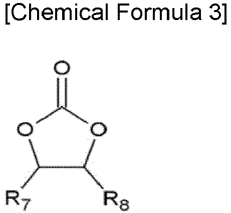

In Chemical Formula 3, R₇ and R₈ are the same or different and may each independently be hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.

Examples of the ethylene carbonate-based compound include difluoro ethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving the cycle life may be flexibly used within an appropriate range.

A separator may be disposed between the positive electrode and the negative electrode. The separator may be selected from, for example, glass fiber, polyester, polyethylene, polypropylene, polytetrafluoroethylene, or a combination thereof, and may be a non-woven fabric or a woven fabric. For example, the rechargeable lithium battery may mainly include a polyolefin-based polymer separator such as polyethylene and polypropylene, and may include a separator coated with a composition including a polymer material or a ceramic in order to secure heat-resistance or mechanical strength. Furthermore, the separator may be used as a single layer or multi-layer structure.

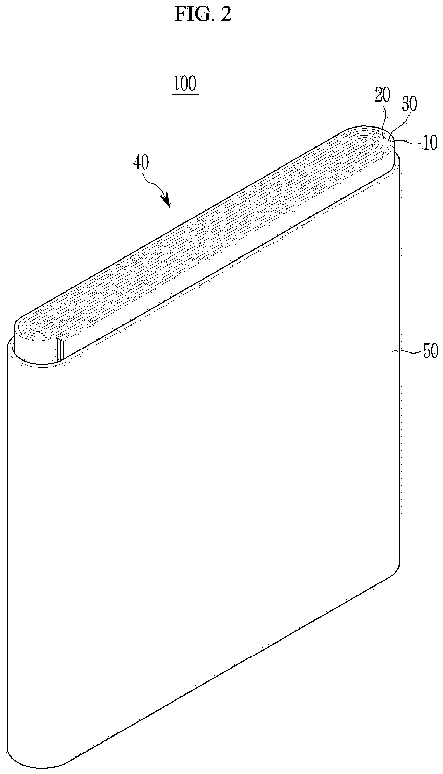

FIG. 2 is an exploded perspective view of the rechargeable lithium battery. The rechargeable lithium battery according to an embodiment is illustrated as a prismatic battery, but is not limited thereto, and may include variously-shaped batteries such as a cylindrical battery, a pouch-type battery, and the like.

Referring to FIG. 2, a rechargeable lithium battery 100 according to an embodiment includes a wound electrode assembly 40 including a positive electrode 10, a negative electrode 20, and a separator 30 disposed therebetween, and a case 50 housing the electrode assembly 40. The positive electrode 10, the negative electrode 20, and the separator 30 may be impregnated in an electrolyte solution (not shown).

Hereinafter, examples of the present invention and comparative examples are described. However, the present invention is not limited to the following examples.

### Examples

### Example 1-1

### (Preparation of negative electrode)

98 wt% of the needle-coke type of artificial graphite, 0.8 wt% of carboxymethyl cellulose, and 1.2 wt% of styrene-butadiene rubber were mixed in pure water to prepare a negative active material slurry. The negative active material slurry was coated on both surfaces of the copper current collector, and dried and compressed to prepare a negative electrode on which a negative active material layer was formed. A X-ray diffraction peak intensity ratio |(₀₀₂)/|(₁₁₀) of the artificial graphite was 100. The X-ray diffraction measurement was measured by the following condition.
Voltage: 40 kV, 40 mA
Wavelength: K-α1 wavelength 1.540598Å, K-α2 wavelength 1.544426Å
10 < 2θ < 90
|(002) peak position: 20° to 30°
|(110) peak position: 70° to 80°
48 wt% of the flake-shaped polyethylene (PE) particle (HDPE, density: 0.965 g/cc, average particle size D50: 2µm, length of the long axis/length of the short axis: 2, thickness: 0.6 µm), 47 wt% of alumina (average particle diameter (D50): 0.7 µm, granular shape), and 5 wt% of an acrylated styrene-based rubber binder were mixed in a 3-methoxy-3-methyl-1-butanol solvent to prepare a negative functional layer composition.

The negative functional layer composition was coated on both surfaces of the negative active material layer of the negative electrode, and dried and compressed to prepare a negative electrode on which a negative functional layer with a thickness of 5 µm, including the flake-shaped polyethylene (PE) particle was coated.

### (Fabrication of rechargeable lithium battery)

95 wt% of a positive active material in which LiCoO₂ (average diameter; 17 µm) and LiFePO₄ (average diameter; 0.4 µm) were mixed at a 9:1 weight ratio, 3 wt% of polyvinylidene fluoride, and 2 wt% of a ketjen black conductive material were mixed in an N-methyl pyrrolidone solvent to prepare a positive active material slurry. The positive active material slurry was coated on both surfaces of an aluminum current collector, and dried and compressed to prepare a positive electrode in which a positive active material layer was formed.

The positive electrode, a separator of a multi layered polyethylene (PE)/polypropylene (PP), and the negative electrode in which the negative functional layer including the flake-shaped PE particle were sequentially laminated to prepare an electrode assembly, and an electrolyte was injected therein to fabricate a rechargeable lithium battery.

Herein, the electrolyte used was a solvent in which 1.0 M LiFP₆ was dissolved in the non-aqueous organic solvent (EC/DEC=50:50 volume ratio).

### Example 1-2

A rechargeable lithium battery was fabricated by the same procedure as in Example 1-1, except that a negative functional layer was prepared by using a flake-shaped PE particle (HDPE, density: 0.965 g/cc, average particle size D50: 4 µm, length of long axis/length of short axis: 2.4, thickness: 0.6 µm) instead of using the flake-shaped polyethylene (PE) particle (average particle size D50: 2 µm, length of long axis/length of short axis: 2, thickness: 0.6 µm) of Example 1-1.

### Example 1-3

A rechargeable lithium battery was fabricated by the same procedure as in Example 1-1, except that a negative functional layer was prepared by using a flake-shaped PE particle (HDPE, density: 0.965 g/cc, average particle size D50: 6 µm, length of long axis/length of short axis: 2.4, thickness: 0.6 µm) instead of using the flake-shaped polyethylene (PE) particle (average particle size D50: 2 µm, length of long axis/length of short axis: 2, thickness: 0.6 µm) of Example 1-1.

### Example 2

A rechargeable lithium cell was fabricated by the same procedure as in Example 1-1, except that an artificial graphite having the X-ray diffraction peak intensity ratio l(₀₀₂)/l(₁₁₀) of 40 was used instead of the artificial graphite of Example 1-1.

### Comparative Example 1

A rechargeable lithium cell was fabricated by the same procedure as in Example 1-1, except that an artificial graphite having the X-ray diffraction ratio |(₀₀₂)/|(₁₁₀) of 135 was used instead of the artificial graphite of Example 1-1.

### Comparative Example 2

A rechargeable lithium cell was fabricated by the same procedure as in Example 1-1, except that an artificial graphite having the X-ray diffraction peak intensity ratio l(₀₀₂)/l(₁₁₀) of 20 was used instead of the artificial graphite of Example 1-1.

### Comparative Example 3

A rechargeable lithium battery was fabricated by the same procedure as in Example 1-1, except that a negative functional layer was prepared by using a spherical PE particle (LDPE, density: 0.925 g/cc, average particle size D50: 2 µm, length of long axis/length of short axis: 1) instead of using the flake-shaped polyethylene (PE) particle (HDPE, density: 0.965 g/cc, average particle size D50: 2 µm, length of long axis/length of short axis: 2, thickness: 0.6 µm) of Example 1-1. A X-ray diffraction peak intensity ratio l(₀₀₂)/l(₁₁₀) of the artificial graphite was 100.

### Comparative Example 4

A rechargeable lithium cell was fabricated by the same procedure as in Example 1-1, except that a negative functional layer was not included.

### Evaluation 1: Evaluation of change of degree of orientation of negative electrode before/after forming negative functional layer

Regarding Example 1-1 to Example 1-3, Example 2, and Comparative Example 1 to Comparative Example 4, the X-ray diffraction peak intensities ratios, l(₀₀₂)/l(₁₁₀) of artificial graphite before/after forming the negative functional layer were measured to compare them. As a result, significant changes were not found. Although the negative functional layer preparation included compress step after coating and drying, the solvent for preparing the negative functional layer allows to release the stress of graphite during the compression, so it was expected that the X-ray diffraction peak intensity ratio, l(₀₀₂)/l(₁₁₀) of the negative active material was not changed before/after forming the negative functional layer. Resultantly, it can be seen that the characteristics of the degree of the orientation of the negative electrode (the X-ray diffraction peak intensity ratio |(₀₀₂)/|(₁₁₀)) were not dependent on the formation or no formation of the negative functional layer.

### Evaluation 2: Evaluation of specific capacity characteristic of the half-cell and the rapid charge characteristics of the rechargeable lithium battery

Coin-type half-cells were fabricated by using a lithium metal counter electrode, instead of using the positive electrodes according to Example 1-1 to Example 1-3, Example 2, Comparative Example 1, Comparative Example 2, and Comparative Example 4. The fabricated coin-type half-cell was 0.2C, 0.01 V cut-off charged under the constant current condition, 0.05C cut-off charged under the constant voltage condition, and 0.2C, 1.5 V cut-off discharged under the constant current condition. Herein, the discharge capacity at the 1^{st} charge and discharge was measured and the specific capacity characteristics of the half-cells were evaluated. The results are shown in Table 1.

Rechargeable lithium cells according to Example 1-1 to Example 1-3, Example 2, Comparative Example 1, Comparative Example 2, and Comparative Example 4 were once charged and discharged in which 0.2C, 4.4 V cut-off charged under the constant current condition, 0.05C cut-off charged under the constant voltage condition, 2.75 V cut-off discharged under the constant current condition, and charged at 2.0 V, 4.4 V cut-off under the constant current condition and 0.05C cut-off under the constant voltage condition for 30 minutes. Thereafter, the cell was 0.2C, 3.0 V cut-off under the constant current condition. From the results, the ratio of the charge capacity at the 2^{nd} charge and discharge to the charge capacity at the 1^{st} charge and discharge was calculated to obtain a 30-minute rapid charge percentage (%). The results are shown in Table 1.

**(Table 1)**

| | Specific capacity (discharge capacity at 0.2C, 1^{st} charge and discharge) (mAh/g) | 30-minute rapid charge percentage (2nd charge amount/1st charge amount) (%) |
|---|---|---|
| Example 1-1 | 345 | 77.1 |
| Example 1-2 | 345 | 77.5 |
| Example 1-3 | 345 | 77.2 |
| Example 2 | 336 | 81.8 |
| Comparative Example 1 | 351 | 65.1 |
| Comparative Example 2 | 321 | 82.4 |
| Comparative Example 4 | 345 | 77.2 |

Referring Table 1, as X-ray diffraction peak intensity ratio l(₀₀₂)/l(₁₁₀) was decreased, the rapid charge characteristic was improved. However, in the half-cell according to Comparative Example 2, as the X-ray diffraction peak intensity ratio l(₀₀₂)/l(₁₁₀) was extremely low, the degree of the random orientation was increased, the pellet density of the negative active material was reduced, and the specific capacity characteristic of the cell was deteriorated. That is, Example 1-1 to Example 1-3 and Example 2 include the negative active material having the X-ray diffraction peak intensity ratio l(₀₀₂)/l(₁₁₀) within the range of the present invention, so that the specific capacity was generally maintained, and the excellent rapid charge characteristics were simultaneously exhibited.

### Evaluation 3: Measurement of high temperature cycle capacity characteristic and the change in thickness of rechargeable lithium battery

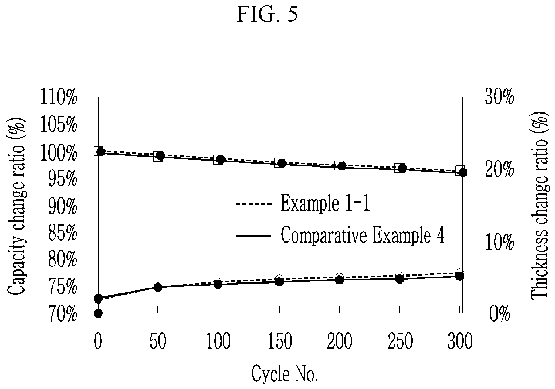

Regarding rechargeable lithium cells according to Example 1-1 and Comparative Example 4, the change in thickness and the cycle capacity characteristics at a high-temperature of 45°C were measured. The charge and discharge was performed by charging at 2.0C, 4.4 V cut-off under the constant current, charging at 0.05C cut-off under the constant voltage, and discharging at 1.0C, 3.0 V cut-off under the constant current, which was regarded as one 1 cycle, and the repeated up to 300 cycles. The change in thickness was measured by using a vernier caliper under an SOC 100 % condition after charge and discharge. The results are shown in FIG. 5.

From FIG. 5, it can be seen that the rechargeable lithium cell according to Example 1-1 exhibited similar high-temperature cycle capacity characteristics and the change in the thickness, compared to the rechargeable lithium cell according to Comparative Example 4. Thus, the high-temperature cycle capacity characteristics and the change in the thickness did not depend on the formation of the negative functional layer on the negative electrode according to one embodiment.

### Evaluation 4: Evaluation of physical safety

Regarding rechargeable lithium cells according to Examples 1-1 to Example 1-3, Example 2, Comparative Example 3, and Comparative Example 4, penetration, fall, and collision tests were examined. The results for examining the physical safety are shown in Table 2. On the other hand, the physical safety evaluation criteria are as shown in Table 3.

**Table 2**

| | Penetration | Dropping | Collision |
|---|---|---|---|
| Example 1-1 | L2 | L2 | L2 |
| Example 1-2 | L2 | L2 | L2 |
| Example 1-3 | L2 | L2 | L2 |
| Example 2 | L2 | L2 | L2 |
| Comparative Example 3 | L4 | L4 | L4 |
| Comparative Example 4 | L5 | L4 | L5 |

**Table 3**

| Criteria Level | Criterion |
|---|---|
| L0 | No occurrence |
| L1 | Leakage of electrolyte, external temperature < 150 °C |
| L2 | External temperature < 200 °C |
| L3 | Smoke, external temperature > 200 °C |
| L4 | Flame |
| L5 | Explosion |

Referring to Tables 2 and 3, it can be expected that in the case of the rechargeable lithium cells according to Example 1-1 to Example 1-3 and Example 2, the passage for ions was effectively closed when the heat runaway occurred by the physical impact, thereby initially showing the shut-down function early, and the cells according to Example 1-1 to Example 1-3 and Example 2 exhibit better physical safety.

## Claims

1. A negative electrode (20) for a rechargeable lithium battery (100), comprising:
a negative current collector (21), a negative active material layer (23), and a negative functional layer (25) which are sequentially laminated,
the negative active material layer (23) comprising a negative active material including a crystalline carbonaceous material having a ratio l(₀₀₂)/l(₁₁₀) of X-ray diffraction peak intensity at a (002) plane to X-ray diffraction peak intensity at a (110) plane of the crystalline carbonaceous material ranging from 30 to 110 determined by using a CuKa ray, and
the negative functional layer (25) comprises flake-shaped polyethylene particles, wherein the flake-shaped polyethylene particles have a ratio of a length of a long axis to a length of a short axis of 1.1 to 4.5.

2. The negative electrode of claim 1, wherein the crystalline carbonaceous material is artificial graphite, natural graphite, or a combination thereof.

3. The negative electrode of claim 1 or 2, wherein the ratio l(₀₀₂)/l(₁₁₀) of X-ray diffraction peak intensity at a (002) plane to X-ray diffraction peak intensity at a (110) plane of the crystalline carbonaceous material is 35 to 105.

4. The negative electrode of any one of the preceding claims, wherein the flake-shaped polyethylene particles have an average particle size (D50) of 1 µm to 8 µm, determined by a dynamic light-scattering measurement method.

5. The negative electrode of any one of the preceding claims, wherein a thickness of the flake-shaped polyethylene particles is 0.2 µm to 4 µm.

6. The negative electrode of claim 1, wherein the negative functional layer (25) further includes inorganic particles and a binder.

7. The negative electrode of claim 6, wherein a sum amount of the flake-shaped polyethylene particles and the inorganic particles is 80 wt% to 99 wt% based on the total weight of the negative functional layer (25).

8. The negative electrode of claim 6, wherein the flake-shaped polyethylene particles and the inorganic particles are included at a weight ratio of 95:5 to 10:90,

9. The negative electrode of any one of the preceding claims, wherein a thickness of the negative functional layer (25) is 1 µm to 10 µm.

10. A rechargeable lithium battery (100), comprising:
a positive electrode (10) comprising a positive current collector and a positive active material layer positioned on the positive current collector;
the negative electrode of any one of claims 1 to 9; and
an electrolyte.

11. The rechargeable lithium battery of claim 10, wherein the positive active material layer includes a first positive active material comprising at least one of a composite oxide of lithium and a metal selected from cobalt, manganese, nickel, or a combination thereof; and a second positive active material comprising a compound represented by Chemical Formula 1:
[Chemical Formula 1] LiₐFe₁-ₓMₓPO₄
wherein, 0.90 ≤ a ≤ 1.8, 0 ≤ x ≤ 0.7, M is Mn, Co, Ni or combination thereof.

12. The rechargeable lithium battery of claim 11, wherein the second positive active material comprises LiFePO₄.

13. The rechargeable lithium battery of claim 11, wherein the positive electrode (10) further comprises a positive functional layer positioned on the positive active material layer.

14. The rechargeable lithium battery of claim 11, wherein the first positive active material and the second positive active material is comprised at a weight ratio of 97 : 3 to 80 : 20.

## Patentansprüche

1. Eine negative Elektrode (20) für eine wiederaufladbare Lithiumbatterie (100), aufweisend:
einen negativen Stromkollektor (21), eine negative aktive Materialschicht (23) und eine negative Funktionsschicht (25), die aufeinanderfolgend laminiert sind,
wobei die negative aktive Materialschicht (23) ein negatives aktives Material aufweist, das ein kristallines kohlenstoffhaltiges Material aufweist, das ein Verhältnis I(₀₀₂)/I(₁₁₀) einer Röntgenbeugungspeakintensität an einer (002)-Ebene zu einer Röntgenbeugungspeakintensität an einer (110)-Ebene des kristallinen kohlenstoffhaltigen Materials im Bereich von 30 bis 110, das unter Verwendung eines CuKa-Strahls bestimmt wird, aufweist, und
wobei die negative Funktionsschicht (25) flockenförmige Polyethylenpartikel aufweist, wobei die flockenförmigen Polyethylenpartikel ein Verhältnis einer Länge einer langen Achse zu einer Länge einer kurzen Achse von 1,1 bis 4,5 aufweisen.

2. Die negative Elektrode nach Anspruch 1, wobei das kristalline kohlenstoffhaltige Material künstlicher Graphit, natürlicher Graphit oder eine Kombination davon ist.

3. Die negative Elektrode nach Anspruch 1 oder 2, wobei das Verhältnis I(₀₀₂)/I(₁₁₀) einer Röntgenbeugungspeakintensität an einer (002)-Ebene zu einer Röntgenbeugungspeakintensität an einer (110)-Ebene des kristallinen kohlenstoffhaltigen Materials 35 bis 105 beträgt.

4. Die negative Elektrode nach einem der vorhergehenden Ansprüche, wobei die flockenförmigen Polyethylenpartikel eine mittlere Partikelgröße (D50) von 1 µm bis 8 µm, die durch ein Verfahren zur dynamischen Lichtstreuungsmessung bestimmt wird, aufweisen.

5. Die negative Elektrode nach einem der vorhergehenden Ansprüche, wobei eine Dicke der flockenförmigen Polyethylenpartikel 0,2 µm bis 4 µm beträgt.

6. Die negative Elektrode nach Anspruch 1, wobei die negative Funktionsschicht (25) ferner anorganische Partikel und ein Bindemittel aufweist.

7. Die negative Elektrode nach Anspruch 6, wobei eine Summenmenge der flockenförmigen Polyethylenpartikel und der anorganischen Partikel 80 Gew.-% bis 99 Gew.-%, bezogen auf das Gesamtgewicht der negativen Funktionsschicht (25), beträgt.

8. Die negative Elektrode nach Anspruch 6, wobei die flockenförmigen Polyethylenpartikel und die anorganischen Partikel in einem Gewichtsverhältnis von 95 : 5 bis 10 : 90 enthalten sind.

9. Die negative Elektrode nach einem der vorhergehenden Ansprüche, wobei eine Dicke der negativen Funktionsschicht (25) 1 µm bis 10 µm beträgt.

10. Eine wiederaufladbare Lithiumbatterie (100), aufweisend:
eine positive Elektrode (10), die einen positiven Stromkollektor und eine positive aktive Materialschicht, die auf dem positiven Stromkollektor positioniert ist, aufweist;
die negative Elektrode nach einem der Ansprüche 1 bis 9; und
einen Elektrolyt.

11. Die wiederaufladbare Lithiumbatterie nach Anspruch 10, wobei die positive aktive Materialschicht ein erstes positives aktives Material, das zumindest eines von einem Verbundoxid von Lithium und einem Metall ausgewählt aus Cobalt, Mangan und Nickel oder einer Kombination davon aufweist; und ein zweites positives aktives Material, das eine Verbindung, die durch die chemische Formel 1 dargestellt ist, aufweist, aufweist:
[Chemische Formel 1] LiₐFe₁₋ₓMₓPO₄
wobei 0,90 ≤ a ≤ 1,8, 0 ≤ x ≤ 0,7, M Mn, Co, Ni oder eine Kombination davon ist.

12. Die wiederaufladbare Lithiumbatterie nach Anspruch 11, wobei das zweite positive aktive Material LiFePO₄ aufweist.

13. Die wiederaufladbare Lithiumbatterie nach Anspruch 11, wobei die positive Elektrode (10) ferner eine positive Funktionsschicht, die auf der positiven aktiven Materialschicht positioniert ist, aufweist.

14. Die wiederaufladbare Lithiumbatterie nach Anspruch 11, wobei das erste positive aktive Material und das zweite positive aktive Material in einem Gewichtsverhältnis von 97 : 3 bis 80 : 20 enthalten sind.

## Revendications

1. Electrode négative (20) pour une batterie rechargeable au lithium (100), comprenant :
un collecteur de courant négatif (21), une couche de matériau actif négatif (23), et une couche fonctionnelle négative (25), qui sont stratifiées en séquence,
la couche de matériau actif négatif (23) comprenant un matériau actif négatif incluant un matériau carboné cristallin ayant un rapport I(₀₀₂)/I(₁₁₀) d'intensité de pic de diffraction des rayons X sur un plan (002) à l'intensité de pic de diffraction des rayons X sur un plan (110) du matériau carboné cristallin situé dans la plage allant de 30 à 110, déterminé par utilisation d'un rayonnement CuKα, et
la couche fonctionnelle négative (25) comprend des particules de polyéthylène en forme de paillettes, où les particules de polyéthylène en forme de paillettes ont un rapport de la longueur de l'axe long à la longueur de l'axe court de 1,1 à 4,5.

2. Electrode négative selon la revendication 1, dans laquelle le matériau carboné cristallin est le graphite artificiel, le graphite naturel, ou une de leurs combinaisons.

3. Electrode négative selon la revendication 1 ou 2, dans laquelle le rapport I(₀₀₂)/I(₁₁₀) d'intensité de pic de diffraction des rayons X sur un plan (002) à l'intensité de pic de diffraction des rayons X sur un plan (110) du matériau carboné cristallin est de 35 à 105.

4. Electrode négative selon l'une quelconque des revendications précédentes, dans laquelle les particules de polyéthylène en forme de paillettes ont une granulométrie moyenne (D50) de 1 µm à 8 µm, déterminée par un procédé de mesure par diffusion dynamique de la lumière.

5. Electrode négative selon l'une quelconque des revendications précédentes, dans laquelle l'épaisseur des particules de polyéthylène en forme de paillettes est de 0, 2 µm à 4 µm.

6. Electrode négative selon la revendication 1, dans laquelle la couche fonctionnelle négative (25) contient en outre des particules inorganiques et un liant.

7. Electrode négative selon la revendication 6, dans laquelle une quantité ajoutée des particules de polyéthylène en forme de paillettes et des particules inorganiques est de 80 % en poids à 99 % en poids par rapport au poids total de la couche fonctionnelle négative (25) .

8. Electrode négative selon la revendication 7, dans laquelle les particules de polyéthylène en forme de paillettes et les particules inorganiques sont incluses en un rapport en poids de 95:5 à 10:90.

9. Electrode négative selon l'une quelconque des revendications précédentes, dans laquelle une épaisseur de la couche fonctionnelle négative (25) est de 1 µm à 10 µm.

10. Batterie au lithium rechargeable (100) comprenant :
une électrode positive (10) comprenant un collecteur de courant positif et une couche de matériau actif positif positionnée sur le collecteur de courant positif ;
l'électrode négative de l'une quelconque des revendications 1 à 9 ; et
un électrolyte.

11. Batterie au lithium rechargeable selon la revendication 10, dans laquelle la couche de matériau actif positif inclut un premier matériau actif positif comprenant au moins un oxyde composite de lithium et d'un métal choisi parmi le cobalt, le manganèse, le nickel, et leurs combinaisons ; et un deuxième matériau actif positif comprenant un composé représenté par la formule chimique 1 :
[formule chimique 1] LiₐFe₁₋ₓMₓPO₄
dans laquelle 0, 90 ≤ a ≤ 1,8, 0 ≤ x ≤ 0, 7, M est Mn, Co, Ni, ou une de leurs combinaisons.

12. Batterie au lithium rechargeable selon la revendication 11, dans laquelle le deuxième matériau actif positif comprend du LiFePO₄.

13. Batterie au lithium rechargeable selon la revendication 11, dans laquelle l'électrode positive (10) comprend en outre une couche fonctionnelle positive positionnée sur la couche de matériau actif positif.

14. Batterie au lithium rechargeable selon la revendication 11, dans laquelle le premier matériau actif positif et le deuxième matériau actif positif sont compris en un rapport en poids de 97:3 à 80:20.
